(19) **Europäisches Patentamt**
**European Patent Office**
**Office européen des brevets**

(11) **EP 4 742 591 A1**

(12) **EUROPEAN PATENT APPLICATION**

(43) Date of publication:
**13.05.2026  Bulletin 2026/20**

(21) Application number: **25204434.2**

(22) Date of filing: **24.09.2025**

(51) International Patent Classification (IPC):
***H04L 9/32*** *(2006.01)*

(52) Cooperative Patent Classification (CPC):
**H04L 9/3252**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(71) Applicant: **Naukowa I Akademicka Siec Komputerowa Panstwowy Instytut Badawczy 01-045 Warszawa (PL)**

(72) Inventor: **KUTYLOWSKI, Miroslaw 54-101 Wroclaw (PL)**

(74) Representative: **Markieta, Jaroslaw Franciszek Kancelaria Rzeczników Patentowych J. Markieta, M. Zielinska-Lazarowicz Sp. p. Bukowinska 2 lok 160 02-703 Warszawa (PL)**

(54) **COMPUTER-IMPLEMENTED METHOD FOR GENERATING A DIGITAL SIGNATURE FOR A MESSAGE IN A PRIVATE-KEY AND PUBLIC-KEY CRYPTOGRAPHIC ARCHITECTURE, ENABLING PRIVATE-KEY RECOVERY AND A METHOD FOR PRIVATE-KEY RECOVERY**

(57)  The subject of the application is a computer-implemented method for generating a digital signature for a message ($M$) in a private-key and public-key cryptographic architecture, enabling recovery of the private key for the message ($M$) based on the message ($M$), using two pairs of cryptographic keys, wherein the first key pair comprises a first private key ($x_A$) and a first public key ($y_A$), and the second key pair comprises a second private key ($x_B$) and a second public key ($y_B$), a signature for the message ($M$) is generated in steps in which: a first auxiliary value ($d$) is generated such that $d \leftarrow y_B^{x_A}$, a second auxiliary value ($k$) is generated such that $k \leftarrow hash(d \parallel M)$, a third auxiliary value ($r$) is generated such that $r \leftarrow g^k$, a hash function value ($e$) is generated for the message ($M$) and the third auxiliary value ($r$) such that $e \leftarrow hash(M \parallel r)$, a signature ($s$) is generated for the message ($M$) $s \leftarrow k - x_A \cdot e \bmod q$, the message ($M$) is linked with the signature ($s$) and the hash function value ($e$). The subject of the application also relates to a computer-implemented method for recovering the private key ($x_A$) from a message ($M$).

$$x_A \leftarrow Rand()$$
$$y_A \leftarrow g^{x_A}$$

$$x_B \leftarrow Rand()$$
$$y_B \leftarrow g^{x_B}$$

$$M$$

$$d \leftarrow y_B^{x_A}$$
$$k \leftarrow hash(d \parallel M)$$
$$r \leftarrow g^k$$
$$e \leftarrow hash(M \parallel r)$$
$$s \leftarrow k - x_A \cdot e \bmod q$$

$$M,s,e$$

Fig. 1

EP 4 742 591 A1

## Description

The invention relates to a computer-implemented method for generating a digital signature for a message in a private-key and public-key cryptographic architecture, enabling private-key recovery, and to a method for recovering the private key. The invention is applicable in the field of computer technology, in particular in cryptography and secure devices for generating digital signatures.

The prior art discloses attempts to introduce methods for recovering a private key used in a cryptographic architecture, particularly in the context of blockchain networks. However, traditional approaches introduce significant vulnerabilities into the private-key and public-key architecture, rendering them susceptible to attacks aimed at impersonating signing entity.

Application CN 113965324A discloses a method for recovering a private key and a system for performing a modular reduction attack based on the RSA-CRT scheme. The method comprises the following steps: performing multidimensional modelling of the normal distribution of the power trace of a modular reduction operation of a training device based on the Hamming weight model, and obtaining a template corresponding to the intermediate value, byte by byte, after modular reduction. Next, by using a matching scheme to select the encrypted text, an intermediate value $r$ of the modular reduction operation of the RSA algorithm is obtained, and the private key $p$ used by the RSA algorithm is recovered via the intermediate value $r$. The public key $n$ is then decomposed to obtain the private key $q$, thereby recovering the private keys $p$ and $q$ of the RSA algorithm. The modeling is based on the Hamming weight model of the intermediate value after modular reduction, and the pattern matching is performed by collecting and selecting the power trace of the modular reduction of the ciphertext to obtain the Hamming weight of the intermediate value after modular reduction.

US11743041B2 discloses private-key recovery performed by a processor of a key-recovery computing system. The key-recovery computing system is configured to provide the original private key. The original private key is associated with the storage location of a resource implemented on a blockchain. The key-recovery computer system is configured to receive additional recovery information provided by a user via the user's computing device. The recovery source is generated at least based on a subset of the additional recovery information, wherein the recovery source is irreversible. The original private key and the recovery key are stored in association with the additional recovery information. In some embodiments, the processor is further configured to cryptographically protect at least one of the following: the original private key and the recovery key, using a universal 2nd factor (U2F) device.

KR20210059525A discloses a system for utilising and recovering a private key based on blockchain multi-signature. The private-key utilisation and recovery system comprises: a user terminal acting as a blockchain network node and generating a first, second, and third private key; a multi-signature server for handling multi-signature transactions; a private-key recovery server for recovering users' private keys; and an identity-verification authentication server for confirming and authenticating the user's identity. The multi-signature server receives and stores the second private key, and the identity-verification authentication server generates a DI identifier based on an identity-verification authentication request received from the user terminal and transmits it to the user terminal. The private-key recovery server receives and stores encrypted DI data and encrypted data of the third private key from the user terminal, and subsequently decrypts and provides the encrypted data in accordance with the private-key recovery request of the user terminal.

A problem encountered in the prior art in the field of cryptography using a private-key and public-key architecture is the inability to recover the private key in the event of loss of access to the private-key medium due to its destruction, damage, or misplacement.

The subject matter of the application is defined in claims 1 and 5.

The invention relates to a computer-implemented method for generating a digital signature for a message in a private-key and public-key cryptographic architecture, enabling recovery of the private key based on the message and utilising two pairs of cryptographic keys, wherein the first key pair comprises a first private key $x_A$ and a first public key $y_A$, and the second key pair comprises a second private key $x_B$ and a second public key $y_B$, a signature for the message is generated in steps in which: a first auxiliary value is generated such that

$$d \leftarrow y_B^{x_A}$$

, a second auxiliary value is generated such that $k \leftarrow hash(d \,\|\, M \,\|\, T)$, a third auxiliary value is generated such that $r \leftarrow g^k$, a hash function value is generated for the message and the third auxiliary value such that $e \leftarrow hash(M \,\|\, r)$, a signature for the message is generated as $s \leftarrow k - x_A \cdot e \bmod q$, the message is linked with the signature and the hash function value.

Preferably, the method according to the invention is characterised in that the first key pair comprising the first private key and the first public key, as well as the second public key are stored on a first medium, and at least the second private key is stored on a second medium.

The invention also relates to a computer program comprising instructions which, when executed by a computer, cause the computer to perform the steps of the method according to the invention.

The invention further relates to a computer-readable medium comprising instructions which, when executed by a computer, cause the computer to perform the steps of the method according to the invention.

The invention also relates to a computer-implemented method for recovering a private key from a message marked with a signature and a signature value (*s, e*) obtained by the method according to the invention, characterised in that, using a first public key and a second key pair comprising a second private key and a second public key, a first auxiliary value is generated such that

$$d \leftarrow y_A^{x_B}$$

, a second auxiliary value is generated such that $k \leftarrow hash(d \| M)$, a third auxiliary value is generated such that $r \leftarrow g^k$, a recomputed third auxiliary value is generated such that

$$\hat{r} \leftarrow g^s \cdot y_A^e$$

, a recomputed hash function value for the message and the recomputed third auxiliary value is generated such that $\hat{e} \leftarrow hash(M \| \hat{r})$, if the recomputed hash function value is equal to the value e and the recomputed third auxiliary value is equal to the third auxiliary value *r*, the private key is recovered such that $x_A \leftarrow (k - s) \cdot e^{-1} \ mod \ q$.

Preferably, the method according to the invention is characterised in that the first public key and the second private key are retrieved from the second medium.

The invention also relates to a computer program comprising instructions which, when executed by a computer, cause the computer to perform the steps of the method according to the invention.

The invention further relates to a computer-readable medium comprising instructions which, when executed by a computer, cause the computer to perform the steps of the method according to the invention.

An advantage of the invention is that it enables secure recovery of the private key used to digitally sign the message, exclusively by a holder of the second private key and the message signed using the original private key. Moreover, the method according to the invention maintains a single copy of the private key and therefore does not significantly weaken the strength of the private-key and public-key architecture. It does not allow reconstruction of either of the cryptographic key pairs based on the message signed using the original private key. A digital signature generated according to the method of the invention remains a valid signature, verifiable using an unmodified algorithm for verifying a digitally signed message, and is indistinguishable from a standard digital signature on the digital message, except for the second medium.

The subject matter of the invention is further illustrated in a preferred embodiment with reference to the figures, in which:

Fig. 1 shows a diagram illustrating the signing a message using a modified digital signature according to the invention;

Fig. 2 shows a diagram illustrating the recovery of a private key according to the invention.

In a preferred embodiment, the computer-implemented method is illustrated by way of example using the Schnorr algorithm modified in accordance with the invention. Nevertheless, the invention is applicable in various private-key and public-key architectures, for example those based on the discrete logarithm problem, such as in server authentication in the WebAuth architecture.

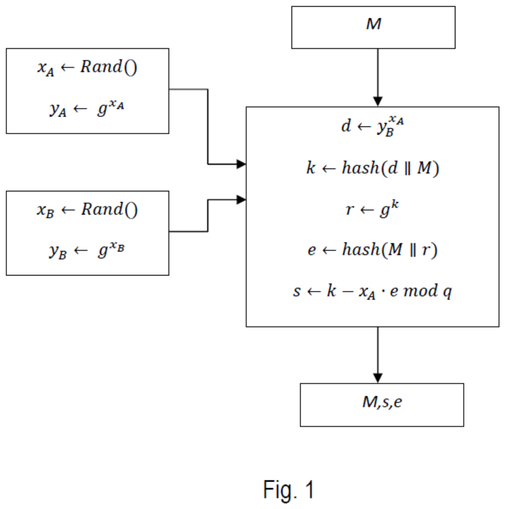

Fig. 1 illustrated a method for generating a digital signature according to a modified version of the Schnorr algorithm for a message M in a private-key and public-key cryptographic architecture, enabling recovery of the private key based on the message *M,* the signature for *M,* and the second private key.

In the method according to the invention, two pairs of cryptographic keys are used, wherein the first key pair comprises a first private key $x_A$ and a first public key $y_A$, and the second key pair comprises a second private key $x_B$ and a second public key $y_B$.

The first key pair $x_A$, $y_A$ is generated as follows:

$$x_A \leftarrow Rand()$$

$$y_A \leftarrow g^{x_A}$$

The second key pair $x_B$, $y_B$ is generated as follows:

$$x_B \leftarrow Rand()$$

$$y_B \leftarrow g^{x_B}$$

The private keys $x_A$ and $x_B$ are generated as pseudorandom numbers.

Next, a signature for the message *M* is generated in steps in which:

a first auxiliary value d is generated such that

$$d \leftarrow y_B^{x_A}$$

a second auxiliary value *k* is generated such that

$$k \leftarrow hash(d \| M)$$

a third auxiliary value *r* is generated such that

$$r \leftarrow g^k$$

a hash function value *e* is generated for the message *M* and the third auxiliary value *r* such that

$$e \leftarrow hash(M \| r)$$

a signature *s* is generated for the message *M* such that

$$s \leftarrow k - x_A \cdot e \bmod q$$

the message *M* is linked with the signature *s* and the hash function value *e*.

The message *M* may include a timestamp *T* that ensures its uniqueness. Moreover, linking the message *M* with the signature s and the hash function value *e* may consist in storing the signature *s* and the value *e* either together with the message or in separate files.

This method differs from the standard method of signing messages in the steps concerning the generation of the values *d* and *k*. In the standard method, the value *k* is generated as a pseudorandom number $k \leftarrow Rand()$. By introducing the first auxiliary value *d* linking the public key $x_B$ with the private key $x_A$, and masking this function using a one-way hash function, a hidden dependency is introduced between the public key $x_B$ and the private key $x_A$. By introducing an additional hashing transformation, which by design is a one-way function, the resulting value *k* simulates a pseudorandom value using the content of the message *M*, thereby preventing the detection of any dependency between the keys from the perspective of the generated signature, since the signature *s* is still generated in a manner identical to the original Schnorr algorithm, namely by reusing the hash function. Preferably, the first key pair comprising the first private key $x_A$ and the first public key $y_A$, together with the second public key $y_B$, is stored on a first medium *A*, while the first public key $y_A$ and the second private key $x_B$ are stored on a second medium *B*. The medium *B* serves as a source of information necessary for reconstructing the first private key $x_A$.

The method according to the invention is preferably implemented by a computer program comprising instructions which, when executed by a computer, cause the computer to perform the steps of the method according to the invention. The computer program is preferably stored on a computer-readable medium comprising instructions which, when executed by a computer, cause the computer to perform the steps of the method according to the invention.

The method of generating a digital signature according to the invention makes it possible to introduce a complementary method for recovering the private key $x_A$ from a message *M* signed with the key $x_A$.

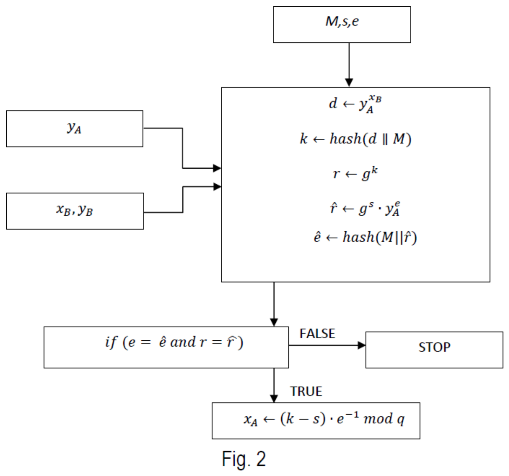

Fig. 2 shows a diagram of the method for recovering the private key $x_A$ from a message *M*, marked with a signature s and a value e, signed using the method according to the invention. The method involves the use of the first public key $y_A$ and a second key pair comprising the second private key $x_B$ and the second public key $y_B$,

a first auxiliary value *d* is generated such that

$$d \leftarrow y_A^{x_B}$$

a second auxiliary value *k* is generated such that

$$k \leftarrow hash(d \parallel M)$$

a third auxiliary value *r* is generated such that

$$r \leftarrow g^k$$

a recomputed value $\hat{r}$ of the third auxiliary value r is generated such that

$$\hat{r} \leftarrow g^s \cdot y_A^e$$

a recomputed value $\hat{e}$ of the hash function value e for the message *M* and the recomputed values $\hat{r}$ of third auxiliary value *r* is generated such that

$$\hat{e} \leftarrow hash(M \parallel \hat{r})$$

if the recomputed value $\hat{e}$ of the value e is equal to the value *e* itself and the recomputed value $\hat{r}$ of the third auxiliary value *r* is equal to the third auxiliary value *r* itself, the private key $x_A$ is recovered such that

$$x_A \leftarrow (k - s) \cdot e^{-1} \bmod q$$

Preferably, in the method for recovering the private key $x_A$, the first public key $y_A$ and the second private key $x_B$ are retrieved from the second medium *B*.

Preferably, the method for recovering the private key $x_A$ is implemented by means of a computer program comprising instructions which, when executed by a computer, cause the computer to perform the steps of the method for recovering the private key $x_A$. The computer program is preferably stored on a computer-readable medium comprising instructions which, when executed by a computer or a secure device, cause the computer or secure device to perform the steps of the method for recovering the private key $x_A$.

In other embodiments, the invention is applicable in any context in which a private-key and public-key architecture is employed.

In the case of server access authorisation, the features of the invention are reflected in the fact that only the holder of a card or secure device storing the key $x_B$ can recover their key $x_A$, in particular a key intended for authenticating to the server. In order to recover the key $x_A$, not only the key $x_B$ is required, but also a signature on any message, such as a challenge previously sent by the server during a prior authentication session. Recovery of $x_A$ is possible if the modified algorithm according to the invention was used for signing.

Knowledge of the modified signature algorithm and of the additional values used therein should not enable the computation of either the auxiliary private key $x_B$ or the private key $x_A$. The modifications introduced to the signature algorithm are externally undetectable, and a signature on a server challenge created using the standard signature algorithm and the key $x_A$ is indistinguishable from a signature on the same challenge generated using the modified signature algorithm according to the invention and the same key $x_A$. The signature verification algorithm remains identical in both cases.

**Claims**

1. A computer-implemented method for generating a digital signature for a message ($M$) in a private-key and public-key cryptographic architecture, which enables recovery of private key on the basis of the message ($M$),

   using two pairs of cryptographic keys, wherein the first key pair comprises a first private key ($x_A$) and a first public key ($y_A$), and a second key pair comprises a second private key ($x_B$) and a second public key ($y_B$), **characterised in that** a signature for the message ($M$) is generated in the steps, in which:

   a first auxiliary value ($d$) is generated such that

   $$d \leftarrow y_B^{x_A}$$

   a second auxiliary value ($k$) is generated such that

   $$k \leftarrow hash(d \parallel M)$$

   a third auxiliary value ($r$) is generated such that

   $$r \leftarrow g^k$$

   a hash function value ($e$) is generated for the message ($M$) and the third auxiliary value ($r$) such that

   $$e \leftarrow hash(M \parallel r)$$

   a signature ($s$) is generated for the message ($M$) such that

   $$s \leftarrow k - x_A \cdot e \; mod \; q$$

   the message ($M$) is linked with the signature ($s$) and the hash function value ($e$).

2. The method according to claim 1, **characterised in that**

the first key pair comprising the first private key ($x_A$) and the first public key ($y_A$), and the second public key ($y_B$), is stored on a first medium ($A$), and at least the second private key ($x_B$) is stored on a second medium ($B$).

3. A computer program comprising instructions which, when executed by a computer, cause the computer to perform the steps of the method according to any one of claims 1 or 2.

4. A computer-readable medium comprising instructions which, when executed by a computer, cause the computer to perform the steps of the method according to any of claims 1 or 2.

5. A computer-implemented method for recovering a private key ($x_A$) from a message ($M$) associated with a signature ($s$) and a value ($e$), signed using the method according to any one of claims 1 or 2, **characterised in that**,

   using a first public key ($y_A$) and a second key pair comprising a second private key ($x_B$) and a second public key ($y_B$), a first auxiliary value ($d$) is generated such that

   $$d \leftarrow y_A^{x_B}$$

   a second auxiliary value ($k$) is generated such that

   $$k \leftarrow hash(d \parallel M)$$

   a third auxiliary value ($r$) is generated such that

   $$r \leftarrow g^k$$

   a recomputed value ($\hat{r}$) of the third auxiliary value ($r$) is generated such that

   $$\hat{r} \leftarrow g^s \cdot y_A^e$$

   a recomputed value ($\hat{e}$) of the hash function value ($e$) for the message ($M$) and the recomputed values ($\hat{r}$) of third auxiliary value ($r$), is generated such that

   $$\hat{e} \leftarrow hash(M \parallel \hat{r})$$

   if the recomputed ($\hat{e}$) hash function value ($e$) is equal to the hash function value ($e$) itself and the recomputed ($\hat{r}$) third auxiliary value ($r$) is equal to the third auxiliary value ($r$) itself, the private key ($x_A$) is recovered such that

$$x_A \leftarrow (k - s) \cdot e^{-1} \bmod q$$

6. The method according to claim 6, **characterised in that** the first public key ($y_A$) and the second private key ($x_B$) are retrieved from the second medium *(B)*.

7. A computer program comprising instructions which, when executed by a computer, cause the computer to perform the steps of the method according to any one of claims 5 or 6.

8. A computer-readable medium comprising instructions which, when executed by a computer, cause the computer to perform the steps of the method according to any one of claims 5 or 6.

$$x_A \leftarrow Rand()$$

$$y_A \leftarrow g^{x_A}$$

$$M$$

$$d \leftarrow y_B^{x_A}$$

$$k \leftarrow hash(d \parallel M)$$

$$r \leftarrow g^k$$

$$e \leftarrow hash(M \parallel r)$$

$$s \leftarrow k - x_A \cdot e \bmod q$$

$$x_B \leftarrow Rand()$$

$$y_B \leftarrow g^{x_B}$$

$$M, s, e$$

Fig. 1

Fig. 2

Europäisches
Patentamt

European
Patent Office

Office européen
des brevets

## EUROPEAN SEARCH REPORT

Application Number

EP 25 20 4434

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SCHNEIER ET AL: "Applied cryptography; Second Edition", 1 January 1996 (1996-01-01), APPLIED CRYPTOGRAPHY : PROTOCOLS, ALGORITHMS AND SOURCE CODE IN C, JOHN WILEY & SONS, NEW YORK [U.A.], PAGE(S) 34 - 44, 84, XP002146086, ISBN: 978-0-471-11709-4 * section 21.3 * | 1-8 | INV. H04L9/32 |
| A | CN 117 811 742 A (INST SOFTWARE CAS) 2 April 2024 (2024-04-02) * paragraph [0011] - paragraph [0043] * | 1-8 | |
| A | KR 102 520 066 B1 (INSTITUTE OF BLOCKCHAIN TECH CO LTD [KR]) 10 April 2023 (2023-04-10) * paragraph [0005] - paragraph [0047]; figures 1-3 * | 1-8 | |
| A | WO 2025/121579 A1 (BALANCEPOLE INC [KR]) 12 June 2025 (2025-06-12) * paragraph [0018] * | 1-8 | TECHNICAL FIELDS SEARCHED (IPC) H04L |

The present search report has been drawn up for all claims

| Place of search | Date of completion of the search | Examiner |
|---|---|---|
| Munich | 3 February 2026 | Prins, Leendert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 4434

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2026

| Patent document cited in search report | Publication date | Patent family member(s) | Publication date |
|---|---|---|---|
| CN 117811742 A | 02-04-2024 | NONE | |
| KR 102520066 B1 | 10-04-2023 | KR 20220120059 A | 30-08-2022 |
| | | WO 2022177201 A1 | 25-08-2022 |
| WO 2025121579 A1 | 12-06-2025 | KR 20250084485 A | 11-06-2025 |
| | | WO 2025121579 A1 | 12-06-2025 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 113965324 A
- US 11743041 B2
- KR 20210059525 A